(19) Europäisches Patentamt
European Patent Office
Office européen des brevets

(11) **EP 1 628 769 B1**

(12) **FASCICULE DE BREVET EUROPEEN**

(45) Date de publication et mention
de la délivrance du brevet:
**04.07.2018 Bulletin 2018/27**

(21) Numéro de dépôt: **04742779.4**

(22) Date de dépôt: **19.05.2004**

(51) Int Cl.:
***B01L 3/00*** *(2006.01)*

(86) Numéro de dépôt international:
**PCT/FR2004/001236**

(87) Numéro de publication internationale:
**WO 2004/103566 (02.12.2004 Gazette 2004/49)**

(54) **Procédé de contrôle d'un débit d'écoulement dans un microcanal**

Verfahren zum Steuern des Flusses in einem Mikrokanal

Process of controlling flow rate in a microchannel

(84) Etats contractants désignés:
**AT BE BG CH CY CZ DE DK EE ES FI FR GB GR
HU IE IT LI LU MC NL PL PT RO SE SI SK TR**

(30) Priorité: **21.05.2003 FR 0306119**

(43) Date de publication de la demande:
**01.03.2006 Bulletin 2006/09**

(73) Titulaires:
• **CENTRE NATIONAL DE
LA RECHERCHE SCIENTIFIQUE -CNRS-
75794 Paris Cedex 16 (FR)**
• **Institut Curie
75248 Paris Cedex 05 (FR)**

(72) Inventeurs:
• **VIOVY, Jean-Louis
F-75013 Paris (FR)**

• **FUTTERER, Claus
F-75016 Paris (FR)**
• **MINC, Nicolas, Davis
F-75012 Paris (FR)**
• **ROSSIER, Jean
F-75005 Paris (FR)**
• **CODARBOX, Jean-Hugues
F-94240 l'Hay Les Roses (FR)**

(74) Mandataire: **Nony
11 rue Saint-Georges
75009 Paris (FR)**

(56) Documents cités:
WO-A1-01/88204    US-A- 5 578 179
US-A- 5 726 404    US-A1- 2002 168 780
US-B1- 6 395 232

## Description

L'invention concerne un procédé de contrôle d'un débit d'écoulement dans un dispositif microfluidique et ses applications.

Dans les domaines technologiques tels que celui de l'analyse de molécules ou de macromolécules biologiques, les biotechnologies, les applications médicales, la synthèse chimique ou la microélectronique, il est nécessaire de pouvoir manipuler et analyser des échantillons de produit dont le volume est de l'ordre du microlitre ou plus faible encore.

Ceci permet de travailler sur des échantillons précieux et de petit volume, de diminuer les quantités de consommables (véhicules, marqueurs, ...) employées, de travailler en parallèle sur de nombreux échantillons, d'accélérer les échanges de matière ou de chaleur, et de réduire les temps de transport.

Sont actuellement développés des dispositifs dits «microfluidiques», ou encore «microsystèmes d'analyse totale» («micro-TAS»). Ces dispositifs comportent généralement des microcanaux dans lesquels peuvent s'effectuer de façon automatisée différentes opérations sur un échantillon.

A titre d'exemple, un dispositif de diagnostic microfluidique permet, sur un échantillon tel qu'une goutte de sang distribuée dans des microcanaux, d'effectuer un prétraitement de l'échantillon (par exemple une lyse cellulaire ou une extraction d'ADN ou de protéine), éventuellement un enrichissement ou une séparation (chromatographie, électrophorèse), suivi par la détection de molécules prédéterminées à l'aide de techniques qui peuvent être de différents types : optique (fluorescence, luminescence, résonance plasmon), électrique ou électrochimique (conductivité, ampérométrie cyclique), ou électronique (transistors à effet de champ, biocapteurs, microlames vibrantes, etc ...).

Des applications, telles que l'analyse d'ADN, le tri cellulaire, la synthèse de composés chimiques, la purification ou l'enrichissement d'un produit en une ou plusieurs espèces, des actions de transport de chaleur pour le refroidissement ou le chauffage d'un composant, des réactions d'amplification d'acides nucléiques, sont possibles avec de tels dispositifs microfluidiques.

Les dispositifs microfluidiques peuvent comporter, de manière générale, un support sensiblement plan, réalisé par gravure, moulage, compression à chaud, ou d'autres méthodes, issues notamment de la microélectronique. Des exemples de procédés de préparation de tels dispositifs sont présentés dans l'ouvrage de M. Madou «Fundamentals of Microfabrication», CRC Press, 1997. En variante, les dispositifs microfluidiques peuvent comporter des supports non plans, étant par exemple intégrés dans des films minces et flexibles. Les dispositifs microfluidiques peuvent encore comporter des microcanaux sensiblement cylindriques.

On désigne par « dispositif microfluidique » un dispositif mettant en jeu le transport d'un produit au sein d'au moins un microcanal. Par « microcanal », on désigne un canal, qui comporte sur au moins une portion de sa longueur une section dont au moins une dimension mesurée en ligne droite d'un bord à un bord opposé est sensiblement inférieure au millimètre.

Un microcanal peut présenter par exemple un rapport surface/volume sensiblement supérieur à 1 $mm^{-1}$, de préférence 4 $mm^{-1}$, par exemple 10 $mm^{-1}$, voire 1 $\mu m^{-1}$.

Le terme « microcanal » englobe également un nanocanal.

Le microcanal peut présenter une section transversale constante ou non. Cette section peut être par exemple circulaire, rectangulaire, carrée ou avoir une forme de cuvette.

Lorsque la section est rectangulaire, le microcanal peut par exemple présenter une épaisseur comprise entre 10 $\mu m$ et 100 $\mu m$ et une largeur comprise entre 20 $\mu m$ et 1 mm, notamment une largeur comprise entre 20 $\mu m$ et 500 $\mu m$.

D'une manière générale, le microcanal peut présenter une longueur comprise entre 1 mm et 50 cm, notamment entre 1 cm et 10 cm, par exemple 2 cm.

La section de petites dimensions du microcanal soulève de nombreux problèmes, souvent difficiles, liés notamment au mouillage, aux forces capillaires, ou à la forte résistance hydrodynamique.

Dans les dispositifs fermés, l'apparition possible de bulles au sein de l'échantillon peut donner lieu à des écoulements parasites suite à des changements de température de faible amplitude.

Dans les dispositifs ouverts, en communication avec par exemple un ou plusieurs réservoirs, la présence de ménisques, l'évaporation, les différences de niveau, peuvent conduire également à des écoulements parasites.

Afin d'éviter ces écoulements parasites, il est possible d'intégrer des microvannes dans le dispositif microfluidique. Cette solution est cependant complexe du point de vue de la fabrication, et ne pallie pas complètement les inconvénients précités, en particulier les difficultés liées aux bulles.

Une autre difficulté liée aux dispositifs microfluidiques est celle d'imposer des écoulements bien contrôlés.

On connaît par US 6 012 902 un dispositif microfluidique mettant en oeuvre une électroosmose induite par un champ électrique. Une limitation liée à cette approche est qu'elle n'est adaptée qu'aux liquides conducteurs, et qu'elle est très sensible à la charge de surface du microcanal, laquelle peut varier dans le temps, en particulier lorsque l'on travaille avec des molécules biologiques.

Des dispositifs incorporant des micropompes sont également connus. On connaît par exemple par US 6 408 878 des pompes à membranes intégrées dans un dispositif microfluidique. Dans US 6 296 020, il est proposé d'utiliser des valves passives au sein des microcanaux. Ces dispositifs sont relativement complexes à fabriquer, fragiles et coûteux.

Des dispositifs dans lesquels le pompage est effectué de l'extérieur ont également été proposés. On peut citer par exemple des micropompes à seringue. Néanmoins, il est difficile de contrôler avec celles-ci de faibles volumes, et les débits engendrés peuvent s'avérer trop élevés ou entachés d'hystérésis.

Il est également proposé d'utiliser des pompes péristaltiques, mais celles-ci peuvent donner lieu à des pulsations très gênantes dans certaines applications.

Le contrôle des écoulements peut encore être effectué à l'aide d'une pression hydrostatique. Cette méthode ne permet toutefois pas d'accéder facilement à une grande gamme de pressions.

Dans US 2002033193, il est proposé d'effectuer une ouverture et une fermeture à distance des canaux, par un contrôle du déplacement de l'air hors du microcanal quand ce dernier est rempli par un liquide : en empêchant la sortie de l'air par une vanne, on arrête le déplacement du fluide. Comme tous les dispositifs dans lesquels du gaz est enfermé dans le microcanal, de faibles écarts de température peuvent donner lieu à des changements de volume importants et à des écoulements parasites.

Dans WO 01/04909, on provoque des impulsions de pression au sein du gaz contenu dans un ou plusieurs réservoirs fermés en communication avec un canal du dispositif microfluidique. Comme dans le cas des pompes péristaltiques, ceci donne lieu à des impulsions gênantes dans l'écoulement. Par ailleurs, à cause de la forte perte de charge hydrodynamique dans les microcanaux, le temps d'équilibrage est relativement long, ce qui rend difficile un contrôle dynamique des écoulements. Enfin, de faibles variations de la température du gaz peuvent conduire à un changement de pression qui s'accompagne en retour d'un changement dans les propriétés de l'écoulement, et il est nécessaire de prévoir un dispositif très bien régulé en température, ce qui est à la fois coûteux et complexe.

On connaît encore par WO 01/88204 un circuit microfluidique comportant un microcanal débouchant à une extrémité dans une chambre de réaction communiquant avec deux conduits d'air latéraux, dont l'un est connecté à un dispositif de régulation de pression positive et l'autre à un dispositif de régulation de pression négative. Ainsi, de l'air circulant dans les conduits latéraux permet d'évacuer un gaz issu de la réaction dans la chambre de réaction. Ce dispositif nécessite la circulation au sein du dispositif microfluidique d'un gaz. Comme évoqué précédemment, dans le cas le plus général où le microcanal contient un liquide, ceci conduit à la présence de ménisques, ce qui peut favoriser l'apparition de bulles qui compliquent le contrôle et altèrent la reproductibilité des processus et opérations de transport dans le microcanal.

La présente invention vise à proposer un dispositif microfluidique qui remédie à tout ou partie des inconvénients précités, et qui permette notamment d'obtenir des écoulements reproductibles et contrôlés.

L'invention concerne plus particulièrement un dispositif microfluidique dans lequel l'écoulement dans un microcanal est obtenu par l'application d'une pression ou d'une dépression à au moins l'une des extrémités du microcanal.

L'invention a ainsi pour objet, selon l'un de ses aspects, un dispositif microfluidique comportant au moins un microcanal relié à une extrémité à une enceinte, caractérisé par le fait qu'il comporte en outre un circuit d'entrée et un circuit de sortie reliés à l'enceinte et entre lesquels peut s'établir un écoulement de fluide sans contact avec le microcanal, l'un au moins des circuits d'entrée et de sortie étant contrôlable de manière à modifier la pression à ladite extrémité du microcanal, notamment indépendamment de la pression à une autre extrémité du microcanal.

L'invention permet de contrôler de manière précise la pression à une extrémité du microcanal, et donc le débit de l'écoulement dans le microcanal, en contrôlant l'un au moins des circuits d'entrée et de sortie, ce qui permet d'avoir des écoulements reproductibles.

De plus, dans un dispositif selon l'invention, l'écoulement dans le microcanal peut être arrêté après un temps caractéristique relativement court en comparaison avec des dispositifs microfluidiques conventionnels, ce qui permet un meilleur contrôle dynamique des écoulements dans le microcanal.

Dans un mode de mise en oeuvre de l'invention, l'écoulement précité de fluide entre le circuit d'entrée et le circuit de sortie peut avoir lieu uniquement dans l'enceinte.

Ainsi, on peut, dans un mode de réalisation, faire circuler dans l'enceinte, entre les circuits d'entrée et de sortie, un fluide différent du produit contenu dans le microcanal.

Avantageusement, le fluide circulant entre les circuits d'entrée et de sortie est un gaz, alors que le produit contenu dans le microcanal est un liquide.

L'invention convient tout particulièrement pour contrôler l'écoulement de liquides dans un microcanal ou un réseau de microcanaux, sans faire entrer de gaz dans ce microcanal ou ce réseau de microcanaux, la pression du gaz contenu dans l'enceinte étant transmise par un liquide au microcanal associé.

Les circuits d'entrée et de sortie peuvent déboucher directement dans l'enceinte de sorte que l'écoulement de fluide précité a lieu dans l'enceinte. En variante, les circuits d'entrée et de sortie ne débouchent pas directement dans l'enceinte et peuvent par exemple être connectés à cette enceinte via un conduit unique, l'écoulement de fluide précité n'ayant alors pas lieu dans l'enceinte.

L'enceinte peut être définie par un récipient de forme relativement simple, les circuits d'entrée et de sortie débouchant dans ce récipient par des conduits. Cependant, l'enceinte peut adopter des formes éventuellement complexés et ramifiées. L'enceinte peut définir un volume clos relié, d'une part, à un orifice d'entrée d'un fluide, d'autre part, à un orifice de sortie de ce fluide, ce volume clos étant également relié par ailleurs à une extrémité au moins du microcanal. Les pressions du fluide circulant entre l'orifice d'entrée et l'orifice de sortie peuvent s'équilibrer de façon quasi-instantanée. Par « quasi-instantané », on entend un équilibrage rapide devant les constantes de temps auxquelles on souhaite réguler le transport de produits au sein du microcanal.

Selon une mise en oeuvre préférée de l'invention, le ou les microcanaux du dispositif sont entièrement remplis de liquide. Chaque microcanal peut être relié à une extrémité à l'enceinte associée par un conduit, chaque microcanal et le conduit correspondant étant entièrement rempli par un ou plusieurs liquides. On limite ainsi le risque d'amener un gaz dans le microcanal, lequel pourrait donner lieu à la formation gênante de bulles.

Chaque conduit reliant une enceinte au microcanal associé peut être flexible ou rigide.

Ce conduit peut présenter sur au moins une portion de sa longueur une section transversale plus grande par plusieurs ordres de grandeur $10^n$ avec $n \geq 1$, et de préférence avec $n \geq 2$, qu'une section du microcanal.

Ce conduit peut présenter un rétrécissement progressif de sa section entre l'enceinte et l'extrémité du microcanal auquel il est relié.

Le microcanal peut par exemple comporter une portion tronconique, laquelle peut définir, le cas échéant, le fond de l'enceinte.

Le dispositif microfluidique peut comporter une platine dans l'épaisseur de laquelle sont réalisées au moins partiellement une ou plusieurs enceintes. Dans un exemple de mise en oeuvre de l'invention, celles-ci communiquent chacune avec une extrémité d'un microcanal par l'intermédiaire d'un conduit fixé notamment sur la platine.

L'alimentation en produit liquide de chaque enceinte peut être assurée par une tubulure introduite dans le conduit et débouchant dans le fond de celui-ci. Cela permet de réduire le risque de formation de bulles dans le microcanal.

Le ou les microcanaux peuvent être réalisés par exemple par gravure, ou moulage, par extrusion ou par injection, compression à chaud ou à froid sur ou dans un support comportant notamment deux platines superposées, l'une définissant le fond du ou des microcanaux et l'autre la paroi supérieure du ou des microcanaux.

Lorsque le dispositif comporte une ou plusieurs enceintes réalisées au moins partiellement sur une platine, cette dernière est de préférence distincte des platines définissant le ou les microcanaux associés, de façon à faciliter la fabrication du dispositif.

L'un au moins des circuits d'entrée et de sortie débouche de préférence à une distance non nulle du fond de l'enceinte associée, ce qui permet d'avoir dans l'enceinte une certaine hauteur de liquide et au-dessus un gaz dont la pression est contrôlée grâce aux circuits d'entrée et de sortie.

Chaque enceinte peut présenter un volume supérieur à 10 mm$^3$, par exemple 1 cm$^3$. Ce volume peut être compris par exemple entre 10 mm$^3$ et 5 ml.

L'écoulement de fluide, notamment de gaz, entre les circuits d'entrée et de sortie peut être sensiblement continu, c'est-à-dire sensiblement constant dans le temps, et n'être pas soumis à des impulsions de courte durée.

Il est également possible d'interrompre l'écoulement de façon transitoire pour une opération ponctuelle, comme par exemple le remplissage d'un microcanal ou d'une enceinte.

Avantageusement, la perte de charge hydrodynamique de l'un au moins des circuits d'entrée et de sortie, notamment du circuit de sortie, est significativement plus petite que celle du microcanal, de préférence au moins dix fois plus petite, et mieux encore plus petite par plusieurs ordres de grandeur $10^n$, avec $n \geq 2$.

Dans un exemple de mise en oeuvre de l'invention, l'un au moins des circuits d'entrée et de sortie comporte une source de pression ou de dépression telle que par exemple une enceinte de gaz, une pompe, un détendeur. En variante, l'un au moins des circuits d'entrée et de sortie communique avec l'atmosphère ambiante, et l'on considère que l'atmosphère constitue également dans ce cas une source de pression.

Les sources de pression associées respectivement aux circuits d'entrée et de sortie sont à des pressions différentes, la pression du circuit de sortie pouvant être inférieure à celle du circuit d'entrée. Le circuit de sortie et l'une des extrémités du microcanal peuvent communiquer avec une source de pression commune, notamment l'atmosphère.

De préférence, l'un au moins des circuits d'entrée et de sortie comporte une vanne contrôlable progressivement, notamment une électrovanne ou une vanne à pointeau.

Dans un exemple de mise en oeuvre de l'invention, chacun des circuits d'entrée et de sortie comporte une vanne associée.

Le contrôle des circuits d'entrée et de sortie par une électrovanne permet notamment d'adapter la dynamique du dispositif en fonction des besoins, sans avoir à intervenir manuellement sur le dispositif.

L'un au moins des circuits d'entrée et de sortie est avantageusement relié à un système de régulation dynamique apte à contrôler l'un au moins des circuits d'entrée et de sortie en fonction d'une information liée à l'écoulement ou à la pression.

Cette information peut être délivrée par un capteur de pression ou un capteur d'écoulement ou de débit, par exemple. Les capteurs peuvent être disposés au niveau des microcanaux, dans l'enceinte ou dans les circuits d'entrée et de sortie.

L'information précitée peut notamment être délivrée par une cascade de capteurs, notamment de pression ou de débit, ayant des plages de fonctionnement différentes, permettant ainsi de mesurer la pression ou le débit sur une plage élargie, les capteurs pouvant notamment commuter pour passer d'une plage à une autre.

D'autres types de capteurs peuvent être utilisés, tels que des détecteurs d'espèces ou de molécules, à fluorescence, électrochimiques, d'absorption, à résonance plasmon, par ampérométrie cyclique, électronique, électrique, ou encore des biosenseurs.

Le système de régulation peut notamment être agencé pour contrôler des électrovannes des circuits d'entrée et de sortie et comporter une unité de traitement telle qu'un ordinateur.

Ceci permet de mettre en place une automatisation poussée, par exemple pour effectuer sans intervention humaine le remplacement des échantillons de produit et/ou d'une matrice de séparation, enchaîner une multiplicité d'opérations telles que des séparations, des rinçages, des changements de produit, des introductions d'échantillons, des réactions chimiques.

Ceci permet également de mettre en place une régulation automatique des électrovannes, par exemple avec un effet en retour d'un ou plusieurs capteurs mesurant le comportement des fluides ou produits utilisés dans le dispositif.

Les circuits d'entrée et de sortie peuvent être contrôlés par analyse d'image. On peut notamment observer l'écoulement dans un microcanal au moyen d'une caméra et contrôler les circuits d'entrée et de sortie en fonction des déplacements observés du produit dans le microcanal, en vue par exemple de faire cesser tout écoulement dans le microcanal ou mesurer un débit de produit.

Dans un exemple de mise en oeuvre de l'invention, le microcanal est relié à chaque extrémité à une enceinte, chaque enceinte étant en communication avec un circuit d'entrée et un circuit de sortie entre lesquels peut s'établir un écoulement de fluide.

Dans un exemple de mise en oeuvre de l'invention, le dispositif comporte une pluralité de microcanaux dont deux au moins sont reliés chacun à une extrémité à une enceinte, chaque enceinte étant en communication avec un circuit d'entrée et un circuit de sortie entre lesquels peut s'établir un écoulement de fluide, l'un au moins des circuits d'entrée et de sortie étant contrôlable de manière à modifier la pression à l'extrémité du microcanal associé.

Au moins deux des microcanaux précités peuvent être connectés entre eux.

Du fait qu'il est possible, grâce à l'invention, de modifier rapidement les écoulements dans des microcanaux connectés, on peut réaliser de manière relativement aisée des répartitions de produits, par exemple pour envoyer une fraction x d'un produit contenu dans un canal vers un premier microcanal et une fraction (1-x) vers un deuxième microcanal, et faire varier la fraction x entre 0 et 1.

Le dispositif, notamment lorsqu'il est destiné à la mise en oeuvre d'une électrophorèse ou d'une électrochromatographie, peut comporter au moins une électrode, et de préférence au moins deux électrodes.

Lorsque l'enceinte contient un produit destiné à être distribué dans le microcanal, l'électrode est de préférence placée au contact de ce produit, celui-ci étant en communication avec le microcanal par l'intermédiaire d'un liquide électriquement conducteur.

L'invention peut être mise en oeuvre pour un grand nombre d'applications telles que, par exemple, une méthode de diagnostic, d'analyse, de purification ou de manipulation d'espèces contenues dans le produit au sein du dispositif microfluidique, lesdites espèces pouvant comporter par exemple, des ions, des atomes, des molécules, des macromolécules, des macromolécules biologiques telles que des acides nucléiques, des peptides, des protéines ou des ensembles de protéines, des oligosaccharides, des glycopeptides, des anticorps, des haptènes, ou encore des organelles, des cellules, des particules organiques, minérales ou organominérales, des latex, des micelles, des vésicules ou des liposomes.

L'invention peut ainsi être utilisée dans le domaine de la chimie combinatoire ou celui de l'analyse par hybridation ou affinité.

On peut également utiliser l'invention pour la synthèse de nouvelles espèces à partir d'espèces contenues dans le dispositif microfluidique et/ou modifier des caractéristiques physiques ou chimiques d'un produit ou d'espèces.

L'invention peut encore être mise en oeuvre pour le criblage à haut débit ou la recherche de médicaments.

L'invention peut encore permettre de produire des arômes.

Le dispositif selon l'invention peut être agencé pour effectuer un tri, une filtration, une extraction liquide/liquide, un traitement d'échantillons, une chromatographie, une électrochromatographie ou une électrophorèse.

Le dispositif selon l'invention peut servir à la mise en oeuvre d'une réaction chimique, biologique ou enzymatique.

L'invention peut permettre de contrôler les écoulements dans le microcanal notamment lorsque le volume de certains fluides ou produits mis en jeu dans le dispositif microfluidique varie au cours de l'opération, par exemple suite à une réaction chimique, un changement d'état, l'apparition de bulles, par exemple dans le cas d'une électrophorèse, ou d'un transport par électroosmose, une vaporisation ou un changement de température.

L'invention est également intéressante dans le cas où un grand nombre de microcanaux en parallèle sont utilisés, car elle permet d'éviter l'utilisation de systèmes de contrôle d'écoulement complexes et encombrants.

L'invention est encore avantageuse dans le cas où le produit contenu dans le ou les microcanaux est peu visqueux, ou lorsque le ou les microcanaux sont relativement courts, par exemple de longueur inférieure ou égale à 10 cm, voire 5 cm, cas pour lequel des écoulements parasites peuvent facilement apparaître, même suite à de faibles variations de pression.

Plus généralement, l'invention est particulièrement adaptée au contrôle des écoulements quand celui-ci présente une importance particulière pour les performances, comme, par exemple, dans les dispositifs mettant en jeu deux fluides non miscibles (liquide/liquide) ou des séparations à haute résolution.

L'invention permet encore de mettre en oeuvre une méthode pour transporter et échanger de la chaleur au sein d'un dispositif microfluidique. Il est ainsi possible de faire circuler dans un premier microcanal adjacent à un deuxième microcanal, un liquide chaud ou froid permettant de chauffer ou refroidir le produit dans le deuxième microcanal. Cette régulation thermique peut être effectuée en contrôlant la vitesse d'écoulement dans le premier microcanal.

La présente invention a encore pour objet, selon un autre de ses aspects, un dispositif microfluidique comportant au moins un microcanal en communication à chaque extrémité avec une enceinte reliée chacune à un circuit d'entrée et un circuit de sortie entre lesquels peut s'établir un écoulement d'un fluide, l'un au moins des circuits d'entrée et de sortie étant contrôlable de manière à modifier la pression à l'extrémité du microcanal.

La présente invention a encore pour objet, selon un autre de ses aspects, un dispositif comportant au moins un microcanal relié à une extrémité à une enceinte, caractérisé par le fait que l'enceinte communique avec un circuit d'entrée et un circuit de sortie entre lesquels peut s'établir un écoulement d'un fluide, l'un au moins des circuits d'entrée et de sortie comportant une vanne contrôlable progressivement de manière à modifier la pression à l'extrémité du microcanal.

La présente invention a encore pour objet, selon un autre de ses aspects, un dispositif microfluidique comprenant au moins un microcanal communiquant avec une enceinte reliée à une alimentation en un fluide et pourvue d'une fuite permettant au fluide provenant de l'alimentation en fluide de quitter l'enceinte, l'alimentation étant contrôlable de manière à modifier la pression à l'extrémité du microcanal.

La fuite peut être formée par un orifice de section prédéterminée, constitué par exemple par la lumière d'une vanne à pointeau. La fuite est avantageusement réglable en fonction des caractéristiques du dispositif microfluidique et du produit circulant dans le microcanal.

L'invention a également pour objet un dispositif microfluidique comportant un ou plusieurs microcanaux dont l'un au moins est relié à une extrémité à une enceinte ayant un volume plus de 5 fois, de préférence de plusieurs ordres de grandeurs $10^n$, avec $n \geq 1$ et de préférence $n \geq 2$, supérieur à celui du microcanal, caractérisé par le fait qu'il comporte en outre un circuit d'entrée et un circuit de sortie reliés à l'enceinte et entre lesquels peut s'établir un écoulement de fluide, l'un au moins des circuits d'entrée et de sortie étant contrôlable de manière à modifier la pression à l'extrémité du microcanal.

L'invention a encore pour objet, selon un autre de ses aspects, un dispositif microfluidique comportant au moins un microcanal relié à une extrémité à une enceinte, caractérisé par le fait qu'il comporte en outre un circuit d'entrée et un circuit de sortie reliés à l'enceinte et entre lesquels peut s'établir un écoulement de fluide, l'un au moins des circuits d'entrée et de sortie étant contrôlable de manière à modifier la pression à ladite extrémité du microcanal, le circuit de sortie comportant une source de pression constituée par un puits de pression ou communiquant directement ou indirectement avec un puits de pression tel que l'atmosphère.

L'invention a encore pour objet, selon un autre de ses aspects, un dispositif microfluidique comportant au moins un microcanal relié à une extrémité à une enceinte, caractérisé par le fait qu'il comporte en outre un circuit d'entrée et un circuit de sortie reliés à l'enceinte et entre lesquels peut s'établir un écoulement de fluide, l'un au moins des circuits d'entrée et de sortie étant contrôlable de manière à modifier la pression à ladite extrémité du microcanal, le circuit de sortie comportant une source de pression ayant une pression sensiblement constante au moins pendant l'écoulement de produit dans le microcanal.

L'invention a encore pour objet, selon un autre de ses aspects, un dispositif microfluidique comportant au moins un microcanal relié à une extrémité à une enceinte, le dispositif comportant en outre un circuit d'entrée et un circuit de sortie reliés à l'enceinte et entre lesquels peut s'établir un écoulement de fluide, l'un au moins des circuits d'entrée et de sortie étant contrôlable de manière à modifier la pression à ladite extrémité du microcanal, l'écoulement de fluide ayant un débit significativement supérieur à celui d'un produit dans le microcanal, de préférence au moins dix fois plus grande, et mieux encore supérieur par plusieurs ordres de grandeur $10^n$, avec $n \geq 2$.

L'invention a encore pour objet, selon un autre de ses aspects, un dispositif microfluidique comportant au moins un microcanal relié à une extrémité à une enceinte comportant en outre un circuit d'entrée et un circuit de sortie reliés à l'enceinte et entre lesquels peut s'établir un écoulement de fluide, l'un au moins des circuits d'entrée et de sortie étant contrôlable de manière à modifier la pression à ladite extrémité du microcanal, la perte de charge hydrodynamique de l'un au moins des circuits d'entrée et de sortie, notamment du circuit de sortie, étant significativement plus petite que celle du microcanal, de préférence au moins dix fois plus petite, et mieux encore plus petite par plusieurs ordres de grandeur $10^n$, avec $n \geq 2$.

L'invention a encore pour objet, selon un autre de ses aspects, un dispositif microfluidique comportant au moins un microcanal relié à une extrémité à une enceinte, caractérisé par le fait qu'il comporte en outre un circuit d'entrée et un circuit de sortie reliées à l'enceinte et entre lesquels peut s'établir un écoulement de fluide, l'un au moins des circuits d'entrée et de sortie présentant une perte de charge hydrodynamique contrôlable de manière à modifier la pression à ladite extrémité du microcanal, indépendamment de la pression à une autre extrémité du microcanal.

L'invention a également pour objet un système de contrôle de pression comportant au moins une enceinte connectable à une extrémité d'un microcanal, caractérisé par le fait qu'il comporte un circuit d'entrée et un circuit de sortie reliés à l'enceinte et entre lesquels peut s'établir un écoulement de fluide sans contact avec le microcanal, l'un au moins des circuits d'entrée et de sortie étant contrôlable de manière à modifier la pression à l'extrémité du microcanal.

L'invention a encore pour objet un système de contrôle de pression comportant au moins une enceinte connectable à une extrémité d'un microcanal, le système étant agencé pour permettre la connexion de microcanaux à ce système, de manière modulaire, ce système pouvant par exemple comporter des modules dont le nombre peut être choisi en fonction du nombre de microcanaux souhaité.

Ce système peut également comporter de façon optionnelle au moins un module agencé pour contrôler au sein du dispositif microfluidique une grandeur autre que la pression, par exemple une tension électrique.

L'invention a encore pour objet, selon un autre de ses aspects, indépendamment ou en combinaison avec ce qui précède, un dispositif microfluidique comportant :

- une première platine dans l'épaisseur de laquelle sont réalisées au moins partiellement une ou plusieurs enceintes,
- au moins un organe d'étanchéité agencé pour isoler l'une au moins des enceintes de l'extérieur,
- un support portant un ou plusieurs microcanaux, ce support comportant notamment deux platines superposées, l'une définissant le fond du ou des microcanaux et l'autre la paroi supérieure de celui-ci ou de ceux-ci, le support étant apte à s'appliquer sur la première platine, chaque enceinte communiquant de manière étanche avec une extrémité d'un microcanal.

Dans un exemple de mise en oeuvre de l'invention, l'enceinte communique avec une extrémité du microcanal par l'intermédiaire d'un conduit flexible fixé par exemple sur la première platine. Ce conduit peut être agencé pour assurer l'étanchéité entre la première platine et le support lorsque ceux-ci sont assemblés.

L'invention a encore pour objet, selon un autre de ses aspects, indépendamment ou en combinaison avec ce qui précède, un dispositif microfluidique comportant :

- un microcanal,
- une enceinte communiquant avec une extrémité du microcanal par un conduit,
- une tubulure introduite dans l'enceinte et débouchant sensiblement dans le fond du conduit.

L'invention a encore pour objet, selon un autre de ses aspects, un procédé de séparation de substances contenues dans un produit, caractérisé par le fait qu'il comporte les étapes consistant à :

- faire circuler ledit produit dans un microcanal ou un réseau de microcanaux d'un dispositif microfluidique tel que défini plus haut, et
- contrôler soit la vitesse d'écoulement dudit produit dans le microcanal ou le réseau de microcanaux, soit la différence de pression entre des extrémités du ou des microcanaux.

L'invention a encore pour objet, selon un autre de ses aspects, un procédé de contrôle d'une réaction chimique ou de changement d'état, caractérisé par le fait qu'il comporte les étapes consistant à :

- faire circuler ledit produit dans un microcanal ou un réseau de microcanaux d'un dispositif microfluidique tel que défini plus haut, et
- contrôler soit la vitesse d'écoulement dudit produit dans le microcanal ou le réseau de microcanaux, soit la différence de pression entre des extrémités du ou des microcanaux.

L'invention pourra être mieux comprise à la lecture de la description détaillée qui va suivre, d'exemples de mise en oeuvre non limitatifs, et à l'examen du dessin annexé, sur lequel :

- la figure 1 est une vue schématique et partielle d'un dispositif microfluidique conforme à un premier exemple de mise en oeuvre de l'invention, comportant un unique microcanal,
- la figure 2 représente, schématiquement et partiellement, une variante de mise en oeuvre du dispositif microfluidique de la figure 1,
- la figure 3 représente, schématiquement et partiellement, un dispositif microfluidique conforme à un autre exemple de mise en oeuvre de l'invention, comportant des microcanaux disposés en croix,
- les figures 4A à 4C illustrent l'évolution de la pression à une extrémité du microcanal communiquant avec des circuits d'entrée et de sortie, en réponse à une ouverture du circuit d'entrée pendant une seconde, respectivement lorsque le circuit de sortie est fermé, à demi fermé et complètement fermé,
- la figure 5 représente, schématiquement et partiellement, en coupe, un dispositif microfluidique conforme à un autre exemple de mise en oeuvre de l'invention,

- la figure 6 est une vue de dessus, schématique et partielle, du support du dispositif de la figure 5, sur lequel est réalisé un réseau de microcanaux,
- la figure 7 représente schématiquement et partiellement la platine du dispositif de la figure 5, sur laquelle sont réalisées des enceintes,
- la figure 8 représente un premier exemple de courbe de séparation d'ADN en fonction du temps, obtenue par la mise en oeuvre de l'invention, et
- la figure 9 représente un second exemple comprenant trois courbes de séparation d'ADN en fonction du temps, obtenues en reproduisant trois fois la même manipulation.

**Premier exemple de réalisation de l'invention**

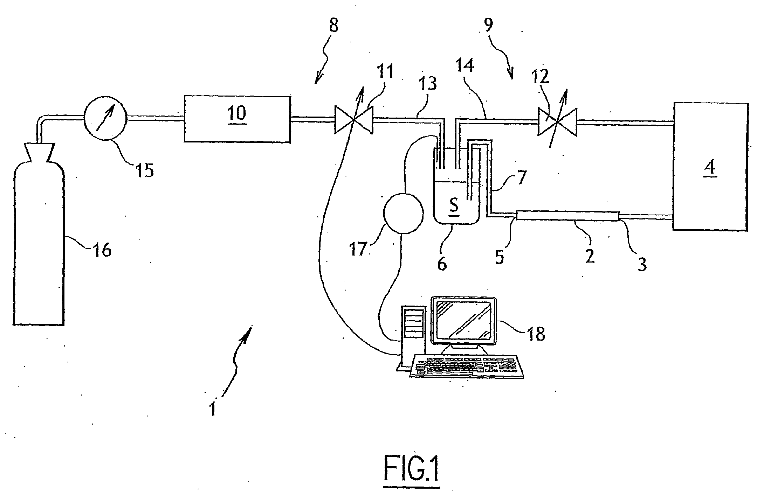

On a représenté sur la figure 1 un dispositif microfluidique 1 conforme à un premier exemple de réalisation de l'invention, comportant un microcanal 2 relié, à une extrémité 3, à une première source de pression 4 et, à l'autre extrémité 5, à une enceinte fermée 6 par l'intermédiaire d'un conduit flexible 7.

L'enceinte 6 contient un produit S, liquide dans l'exemple décrit, à distribuer dans le microcanal 2.

L'enceinte 6 communique, d'une part, par l'intermédiaire d'un conduit 13, avec un circuit d'entrée 8 associé à une deuxième source de pression 10 et, d'autre part, par l'intermédiaire d'un conduit 14, avec un circuit de sortie 9 associé à la première source de pression 4.

La première source de pression 4 est à une pression $P_1$ et la deuxième source de pression 10 contient un gaz à la pression $P_2$.

On note que, dans la présente invention, les valeurs de pression sont ramenées à une pression de référence, par exemple la pression atmosphérique.

Selon une variante, l'une des pressions $P_1$ ou $P_2$, peut elle-même correspondre à la pression atmosphérique. Dans ce cas, la source de pression correspondante (par exemple la source de pression 4) comporte avantageusement un amortisseur de pression en communication avec l'atmosphère, l'amortisseur permettant de protéger le dispositif des fluctuations brusques de la pression environnante.

Dans l'exemple décrit, la pression $P_2$ est supérieure à la pression $P_1$.

La pression $P_2$ est maintenue constante à l'aide d'un manodétendeur 15 relié à une bouteille d'azote 16.

En variante, la source de pression 10 peut être associée à l'enceinte d'un compresseur.

Une électrovanne 11 est disposée sur le chemin du conduit 8 afin de réguler le débit de gaz provenant de la source de pression 10.

Une vanne à pointeau 12 est disposée sur le chemin du conduit 9 afin de contrôler le débit de gaz quittant l'enceinte 6.

En réglant l'ouverture des vannes 11 et 12, il est possible d'établir un écoulement de gaz dans l'enceinte 6 entre les circuits d'entrée 8 et de sortie 9.

Le circuit de sortie 9 constitue une fuite pour le gaz provenant du circuit d'entrée 8.

Le débit I du produit S dans le microcanal 2 est réglable en agissant notamment sur la différence de pression P entre les deux extrémités 3 et 5 du microcanal 2. Ce débit I s'exprime par la formule approchée :

$$I = r^4 \, P/(8 \, L)$$

r étant le rayon du microcanal et L sa longueur.

Cette formule est valable pour un microcanal de section circulaire, d'autres expressions étant connues ou peuvent être obtenues en résolvant l'équation de Stokes, pour des canaux de section différente.

Par analogie avec les circuits électriques, on peut relier la différence de pression P au débit I par la formule :

$$P = RI$$

où R est appelée la résistance microfluidique, étant donnée par la formule approchée :

$$R \approx 8L/r^4$$

Dans l'exemple considéré, on note $R_c$ la résistance microfluidique associée au microcanal, $R_f$ celle associée au circuit de sortie 9 et $R_e$ celle associée au circuit d'entrée 8.

En régime stationnaire, le débit $I_c$ dans le canal est donné par :

$$I_c = \frac{P_f}{R_c}$$

où $P_f = P_1 R_f R_c/(R_f R_c + R_e R_f + R_e P_c)$

On remarque qu'il est possible de régler ce débit $I_c$ en faisant varier l'ouverture de la vanne 11, c'est-à-dire la valeur $R_e$, sans à-coups, $R_e$ pouvant varier continûment.

Par ailleurs, le temps d'arrêt caractéristique de l'écoulement suite à la fermeture de la vanne 11 ($R_e$ passant d'une valeur finie à une valeur infinie) est donné par :

$$T = V_1 . R_c / \left( \frac{R_c}{R_f} + 1 \right)$$

$V_1$ étant le volume de gaz contenu dans l'enceinte 6.

Dans les dispositifs connus dans lesquels l'enceinte de produit n'est pas reliée à un circuit de sortie ou une fuite, ce temps caractéristique T est de l'ordre de

$(R_c.V_1)$. La résistance d'un microcanal $R_c$ étant relativement élevée, ce temps caractéristique est en général long, pouvant aller jusqu'à environ plusieurs dizaines de minutes.

Grâce à l'invention, on peut choisir la valeur $R_f$, et ramener le temps caractéristique T à des valeurs relativement faibles, par exemple de quelques secondes.

On notera que la viscosité à prendre en compte pour le calcul de la valeur de $R_f$ est celle du gaz, soit de plusieurs ordres de grandeur inférieure à celle du liquide contenu dans le microcanal 2.

Dans l'exemple considéré, l'électrovanne 11 est reliée à un système de régulation 18 permettant de contrôler l'ouverture de celle-ci en fonction d'une information de pression délivrée par un capteur de pression 17, mesurant la pression du gaz dans l'enceinte 6.

Il est ainsi possible de contrôler de manière dynamique la pression du gaz dans cette enceinte 6.

Le système de régulation 18 peut être agencé pour prendre en compte d'autres informations et notamment celles liées à l'écoulement du produit dans le microcanal 2.

La vanne à pointeau 12 peut être remplacée, sans que l'on sorte du cadre de la présente invention, par une électrovanne également reliée au système de contrôle de sorte que le dispositif 1 puisse être contrôlé de manière totalement automatique, sans l'intervention d'un utilisateur.

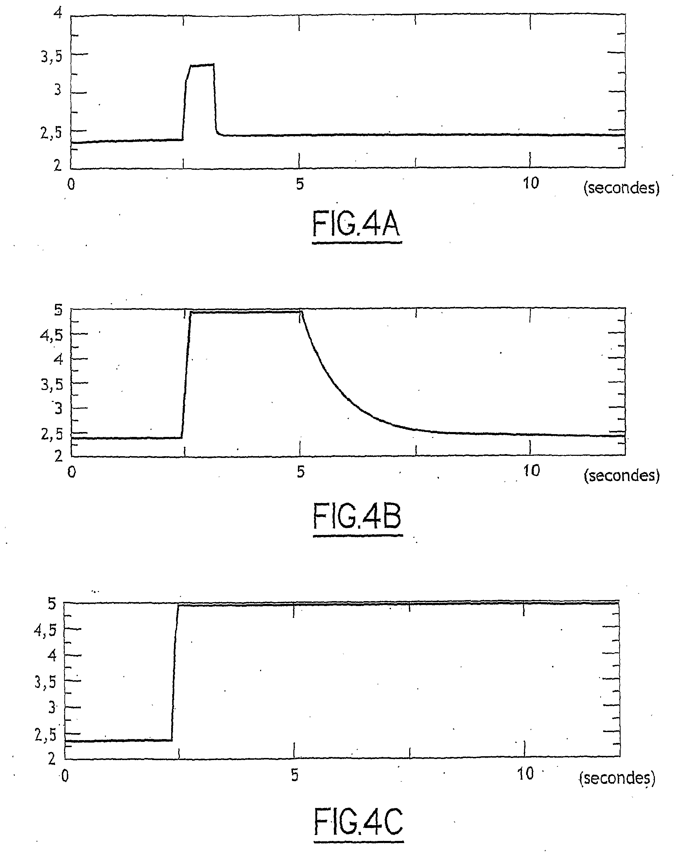

L'effet de la fuite sur ce temps caractéristique d'équilibrage du dispositif est illustré sur les figures 4A à 4C.

Ces figures 4A à 4C représentent l'évolution de la pression en fonction du temps.

La figure 4A correspond au cas où la vanne à pointeau du circuit de sortie est entièrement ouverte, la figure 4B au cas où celle-ci est à moitié ouverte, et la figure 4C au cas où celle-ci est fermée.

Dans tous les cas, on a ouvert l'électrovanne du circuit d'entrée pendant un temps de 1 seconde.

Sur la figure 4A, on constate que la pression dans l'enceinte atteint rapidement une valeur constante et stable, et retourne rapidement à l'équilibre après fermeture de l'électrovanne du circuit d'entrée, en un temps inférieur à une seconde.

Sur la figure 4B, on voit qu'avec une fuite moins efficace, d'une part la pression sature le capteur de pression, et d'autre part le retour à l'équilibre prend une dizaine de secondes, ce qui est moins intéressant pour la régulation des écoulements.

Enfin, en l'absence d'ouverture de la vanne à pointeau, le capteur de pression reste saturé pendant toute la durée de l'expérience, ce qui montre qu'il est impossible d'arrêter l'écoulement dans le canal en l'absence de fuite.

Dans l'exemple considéré, seule l'extrémité 5 du microcanal 2 est soumise à un contrôle de pression.

On ne sort pas du cadre de la présente invention lorsque les pressions respectives aux deux extrémités 3 et 5 du microcanal 2 sont contrôlables simultanément.

## Deuxième exemple de réalisation de l'invention

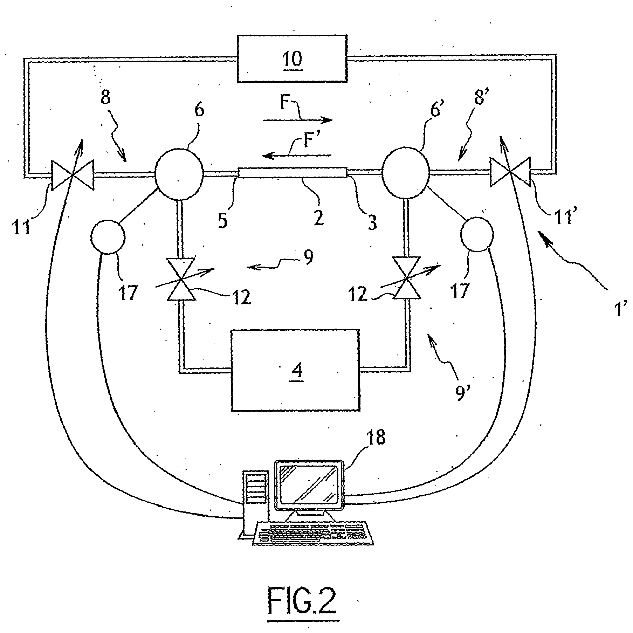

On a représenté sur la figure 2 un dispositif microfluidique sensiblement analogue au dispositif 1, comportant un microcanal 2 relié à chaque extrémité 3, 5 à une enceinte 6, 6'.

Chaque enceinte 6, 6' est en communication, à l'instar du dispositif 1, avec un circuit d'entrée 8, 8' et un circuit de sortie 9, 9'.

Les deux circuits d'entrée 8, 8' sont associés à une source de pression 10 commune et les deux circuits de sortie 9, 9' à une source de pression 4 commune.

Le dispositif 1' permet de déplacer le produit S contenu dans le microcanal 2 dans un sens ou dans l'autre.

Ainsi, pour déplacer le produit suivant la flèche F, l'électrovanne 11' du circuit d'entrée 8' est fermée, la vanne à pointeau 12 du circuit de sortie 9' étant ouverte de sorte que l'extrémité 3 du microcanal soit à la pression $P_1$.

On fait ensuite établir un écoulement de gaz du circuit d'entrée 8 vers le circuit de sortie 9 dans l'enceinte 6 de manière à augmenter la pression dans cette enceinte 6 et faire déplacer le produit S dans la direction de la flèche F, du fait de la différence de pression entre les extrémités 3 et 5 du microcanal 2.

Pour déplacer le produit dans l'autre sens, à savoir dans le sens de la flèche F', l'électrovanne 11 du circuit d'entrée 8 est fermée et la vanne à pointeau 12 du circuit de sortie 9 ouverte et un écoulement de gaz est établi dans l'enceinte 6 entre les circuits d'entrée 8' et de sortie 9'.

## Troisième exemple de réalisation de l'invention

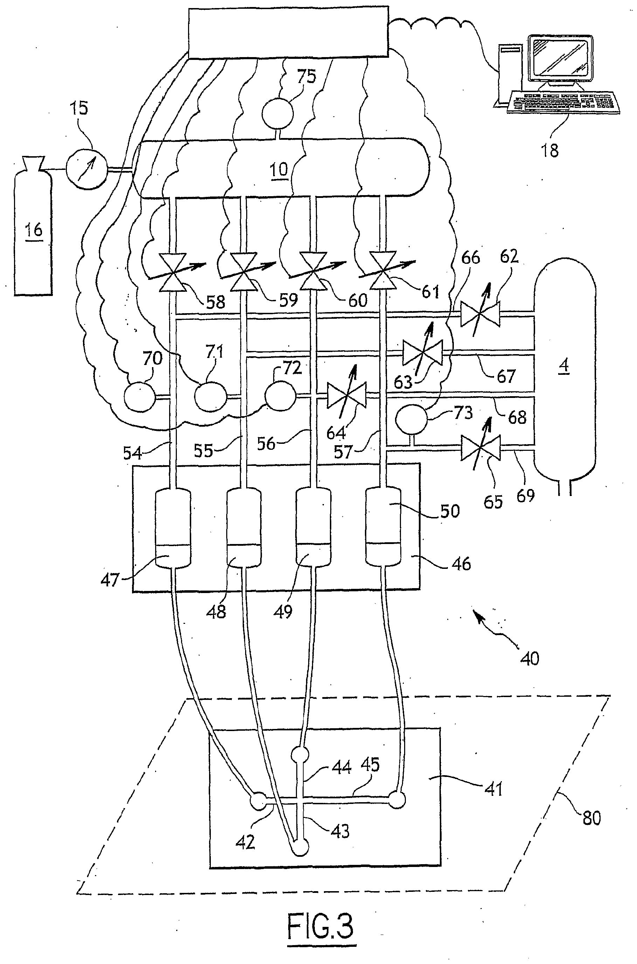

On a représenté à la figure 3 un dispositif microfluidique 40 conforme à un autre exemple de mise en oeuvre de l'invention.

Ce dispositif 40 sert notamment pour la séparation électrophorétique et comporte une cellule microfluidique 41 sur laquelle sont réalisés des microcanaux 42-45 disposés en croix. Dans l'exemple considéré, les microcanaux 43 et 44 sont dans le prolongement l'un de l'autre.

Cette cellule 41 est préparée dans un bloc de PDMS commercialisé sous la dénomination Sylgard 184, Dow Corning, comme décrit par exemple dans Y. Xia, G. M. Whitesides, Angew. Chem. Int. Ed. 37, 550 (1998).

Des orifices sont percés dans le bloc de PDMS afin de mettre les extrémités de chacun des canaux 42-45 en communication respectivement avec des enceintes 47-50, lesquelles sont portées par un bloc de connexion 46.

L'une des extrémités des microcanaux peut éventuellement être reliée à une chambre de réaction.

Les enceintes 47-50 sont reliées par des conduits 54-57 à une source de pression commune 10, par l'intermédiaire de vannes à commande proportionnelle 58-61 commercialisées sous la dénomination KV Automation 01216 002 20.

La source de pression 10 est du type décrit en référence à la figure 1.

Les conduits 54-57 se raccordent, entre les enceintes 47-50 et les vannes 58-61, chacun à un second conduit 66-69.

Les conduits 66-69 définissent des fuites réglables par l'intermédiaire de vannes à pointeau 62-65 commercialisé par la société Upchurch Scientific, en communication avec la source de pression 4 comme celle décrite en référence à la figure 1.

A l'instar du dispositif 1, chaque enceinte 47-50 est reliée à un circuit d'entrée contrôlable par les vannes 58-61 et un circuit de sortie contrôlable par les vannes 62-65.

Un écoulement de gaz peut ainsi être établi entre chaque vanne 58-61 et la vanne 62-65 correspondante.

Chaque conduit 54-57 est relié à un capteur de pression 70-73 permettant de mesurer la pression du gaz dans les enceintes 47-50.

Un capteur 75 permet de mesurer la pression de la source de pression 10.

Les électrovannes 58-61 sont commandées par le système de régulation 18.

La cellule microfluidique 41 est placée sur un microscope inversé 80 commercialisé sous la dénomination Zeiss Axiovert 135 muni d'un objectif à faible grossissement (10X).

Pour estimer le temps caractéristique du dispositif, on peut procéder de la manière suivante.

On commence par régler la pression de la source de pression 10, en agissant sur le détendeur 15, sur une valeur comprise entre 0.01 et 1 bar, c'est-à-dire entre $10^3$ Pa et $10^5$ Pa, par rapport à la pression atmosphérique.

On remplit partiellement l'enceinte 49 avec de l'eau filtrée, additionnée de 0,1 % de surfactant commercialisé sous la dénomination Pluronic F127 par la société BASF pour améliorer la mouillabilité, et on attend que l'ensemble des canaux 42-45 soit rempli par capillarité.

Si nécessaire, on peut, pour accélérer le processus ou éliminer des bulles résiduelles, pressuriser l'enceinte 49.

Quand on constate par l'observation au microscope que les canaux 42-45 sont remplis, on remplit partiellement les enceintes 48 et 50 avec de l'eau filtrée, et l'enceinte 47 avec une solution contenant des particules aisées à observer au microscope (par exemple de l'eau additionnée à 1 % de lait non écrémé, l'émulsion d'huile contenue dans le lait servant de traceur d'écoulement).

Il est préférable de remplir l'enceinte 50 avec un niveau supérieur à celui des autres enceintes 47-49, cette enceinte 50 servant de référence.

On constate qu'en augmentant la pression dans l'enceinte 47, il est aisé de faire pénétrer l'eau additionnée de lait dans le canal 42, et de l'y mouvoir à une vitesse prédéterminée.

En réglant les pressions dans les enceintes 47-50, on peut ainsi démarrer ou arrêter le produit à volonté dans chacun des canaux 42-45, avec un temps caractéristique faible.

En agissant sur les vannes à pointeau 62-65, on peut augmenter ou réduire à volonté ce temps caractéristique, depuis plusieurs minutes jusqu'à environ une seconde.

## Quatrième exemple de réalisation de l'invention

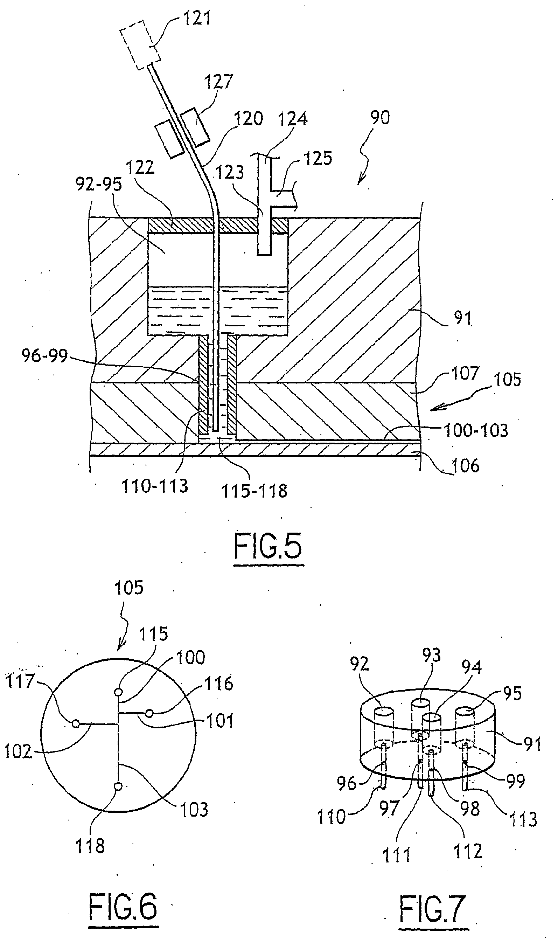

Dans cet exemple de réalisation illustré sur les figures 5 à 7, le dispositif microfluidique 90 comporte une platine 91 dans l'épaisseur de laquelle sont réalisées des enceintes 92-95. Chaque enceinte débouche sur la face inférieure de la platine 91 par un orifice de sortie 96-99.

Le dispositif microfluidique 90 comporte en outre un support 105 sur lequel sont réalisés des microcanaux 100-103 disposés en croix, les microcanaux latéraux 101 et 102 étant légèrement décalés l'un par rapport à l'autre, comme on peut le voir sur la figure 6.

Ce support 105 est constitué de deux platines superposées 106 et 107, l'une 106 définissant le fond des microcanaux et l'autre 107 une paroi supérieure de ceux-ci.

Après assemblage de la platine 9 avec le support 105 comme illustré sur la figure 5, chaque enceinte 92-95 communique de manière étanche avec une extrémité de microcanal 100-103 du support 105 par l'intermédiaire d'un conduit flexible 110-113 fixé sur la platine 91.

Chaque conduit 110-113 débouche dans le fond d'une chambre 115-118 du support 105, chaque chambre 115-118 communiquant avec une extrémité d'un microcanal.

Chaque enceinte 92-95 peut être alimentée en produit à l'aide d'une tubulure flexible 120 de faible diamètre, laquelle est introduite dans le conduit 110-113 correspondant et débouche dans le fond de celui-ci, comme on peut le voir sur la figure 5.

Le fait que la tubulure 120 débouche dans le fond du conduit 110-113 permet d'éviter la formation de bulles lors du remplissage de l'enceinte.

Cette tubulure 120 peut être reliée à une microseringue 121 contenant le produit à injecter dans l'enceinte correspondante, ou à une micropipette permettant de prélever par aspiration ou surpression un échantillon dans un porte-échantillon, par exemple une plaque de microtitration.

Chaque enceinte 92-95 est fermée de manière étanche par un joint d'étanchéité 122.

Un conduit 123 communiquant avec les circuits d'entrée 124 et de sortie 125 est introduit dans chaque enceinte 92-95 de manière à permettre le contrôle de la pression dans celle-ci.

Chaque tubulure 120 peut être associée à un dispositif de pincement 127 commandé de manière électromécanique par exemple, agencé pour contrôler le débit dans la tubulure 120 en déformant celle-ci.

On va maintenant présenter différents exemples d'application de l'invention.

**Premier Exemple d'application : Séparation électrophorétique d'ADN.**

On suppose que l'on utilise le dispositif 40 du troisième exemple de réalisation décrit ci-dessus.

La cellule 41 est placée dans une bobine magnétique disposée sur la platine du microscope 80.

On introduit dans l'enceinte 49 une solution de particules magnétiques dans du tampon TBE telles que décrites dans Doyle, Science, 295, 2237 (2002), et on remplit l'ensemble des canaux 42-45 avec cette solution, en appliquant une légère surpression dans l'enceinte 49.

Une fois les canaux 42-45 remplis, on applique un champ magnétique en faisant circuler un courant dans la bobine magnétique, ce qui a pour fonction de créer un réseau de colonnes magnétiques dans les canaux.

On introduit ensuite du tampon TBE dans les enceintes 47 et 50, et la solution d'ADN à analyser dans l'enceinte 48.

On fait alors circuler la solution d'ADN comprenant par exemple de l'ADN de phage Lambda, de 48,5 kilo-paires de bases et de l'ADN de phage T4, de 166 kilo-paires de bases de l'enceinte 48 vers l'enceinte 50 dans les canaux 43 et 45, en appliquant une surpression de l'ordre de 0.1 bar ($10^4$ Pa) dans l'enceinte 48, et une surpression plus faible, de l'ordre de 0.02 bar ($2.10^3$ Pa), dans les enceintes 47 et 50.

Enfin, on annule les pressions dans toutes les enceintes, et on fait migrer l'ADN dans le canal 44, en appliquant entre les enceintes 47 et 49 une différence de tension électrique grâce à des électrodes disposées dans les enceintes 47 et 49.

Optionnellement, des électrodes placées dans les enceintes 48 et 50 permettent d'éviter que l'ADN contenu dans les canaux 43 et 45 ne vienne créer un bruit de fond parasite dans le canal 44, comme cela est décrit par exemple dans C.S. Effenhauser, A. Manz, H.M. Widmer, Anal. Chem. 65, 2637 (1993).

Grâce aux vannes à pointeau, les bulles créées par l'électrolyse aux électrodes peuvent s'échapper sans perturber l'écoulement du fluide contenu dans les canaux.

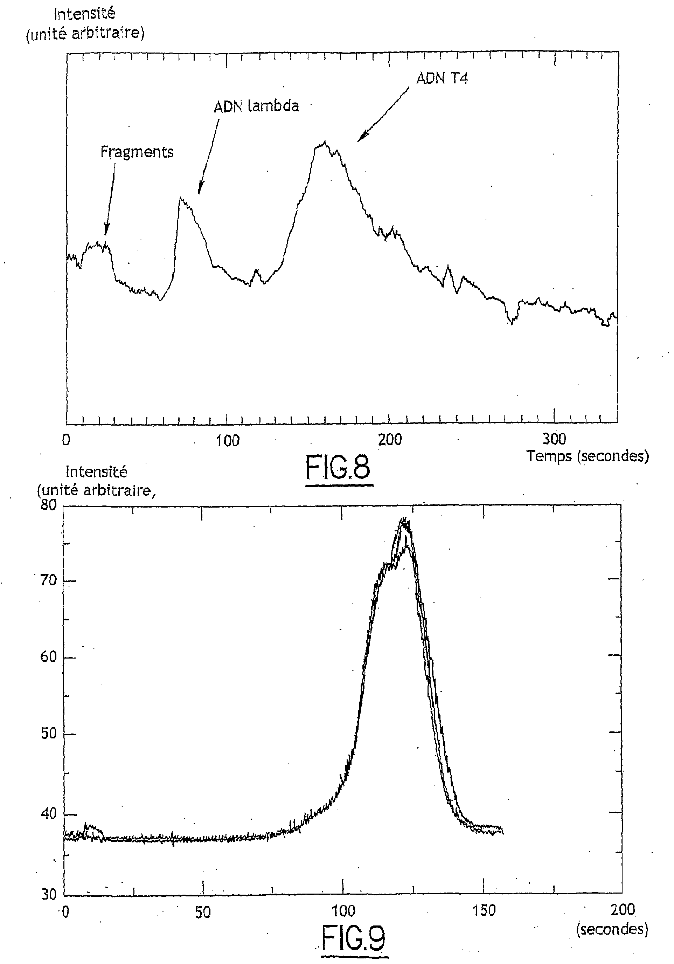

Comme on peut le voir à titre d'exemple sur la courbe de la figure 8, on obtient une séparation en plusieurs pics en seulement quelques minutes alors que la même séparation dans les systèmes classiques d'électrophorèse sur gel prend une douzaine d'heures.

Par ailleurs, toute l'opération peut être répétée de nombreuses fois sans intervention manuelle sur le dispositif, simplement en le contrôlant depuis le système de régulation 18, à la demande ou de façon préprogrammée.

L'invention permet d'obtenir une excellente reproductibilité des courbes de séparation, comme cela est visible sur la figure 9.

**Deuxième Exemple d'application : Digestion enzymatique de protéines**

Dans cet exemple d'application, des billes magnétiques servant de support à la tripsine sont introduites dans le ou les microcanaux, ces billes étant immobilisées grâce à un aimant. On fait ensuite circuler dans le ou les microcanaux un produit contenant des protéines à digérer.

L'invention permet de contrôler précisément le déplacement des fragments de protéines ainsi générées et rend plus aisé leur identification, par exemple, par électrophorèse ou chromatographie éventuellement couplée à une spectrométrie de masse.

**Troisième Exemple d'application : Catalyse hétérogène**

Dans cet exemple d'application, on fixe le catalyseur sur une paroi du microcanal ou sur des billes magnétiques immobilisées grâce à un aimant.

On fait ensuite circuler dans le microcanal le produit devant réagir avec le catalyseur.

**Quatrième exemple d'application : Synthèse chimique**

On peut utiliser le réseau de microcanaux en croix du dispositif 40 pour envoyer à partir de deux microcanaux, par exemple 42 et 45, deux réactifs vers l'intersection des microcanaux et observer la cinétique de la réaction qui s'y produit. On peut utiliser par exemple les deux autres microcanaux 43 et 44 pour évacuer le produit de la réaction.

**Revendications**

1. Procédé de contrôle d'un débit d'écoulement dans un microcanal (2 ; 42-45 ; 100-103) d'un dispositif microfluidique, ledit dispositif comportant une enceinte (6 ; 6' ; 47-50 ; 92-95), un circuit d'entrée (8 ; 8' ; 124) et un circuit de sortie (9 ; 9' ; 125) reliés à l'enceinte et entre lesquels peut s'établir un écoulement de fluide sensiblement continu sans contact avec le microcanal, les circuits d'entrée et de sortie débouchant directement dans l'enceinte de sorte que l'écoulement de fluide entre les circuits d'entrée et de sortie ait lieu dans l'enceinte, ou étant connectés à l'enceinte via un conduit unique, l'écoulement entre les circuits d'entrée et de sortie n'ayant alors pas lieu dans l'enceinte, l'un au moins des circuits d'entrée et de sortie comportant une vanne (11 ; 11' ; 12 ; 58-61 ; 62-65) et étant contrôlable de manière à modifier la pression à ladite extrémité du microcanal, indépendamment de la pression à une autre extrémité du microcanal, procédé dans lequel on établit un écoulement de fluide sensiblement continu, sans contact avec le microcanal, entre les circuits d'entrée et de sortie, et on contrôle ladite vanne pour modifier ladite pression.

2. Procédé selon la revendication précédente, **caractérisé par le fait que** ledit fluide circulant dans l'enceinte (6 ; 6' ; 47-50 ; 92-95) entre le circuit d'entrée et le circuit de sortie est différent du ou des produit contenus dans le microcanal (2 ; 42-45 ; 100-103).

3. Procédé selon la revendication précédente, **caractérisé par le fait que** le fluide circulant entre les circuits d'entrée et de sortie est un gaz.

4. Procédé selon l'une des revendications 2 et 3, **caractérisé par le fait que** le produit contenu dans le microcanal (2 ; 42-45 ; 100-103) est un liquide.

5. Procédé selon l'une quelconque des revendications précédentes, **caractérisé par le fait que** le microcanal (2 ; 42-45 ; 100-103) présente un rapport surface/volume sensiblement supérieur à 1 mm$^{-1}$, de préférence 4 mm$^{-1}$, par exemple 10 mm$^{-1}$, voire 1 $\mu$m$^{-1}$.

6. Procédé selon l'une quelconque des revendications précédentes, **caractérisé par le fait que** le volume de l'enceinte (6 ; 6' ; 47-50 ; 92-95) est compris entre 10 mm$^3$ et 5 ml.

7. Procédé selon l'une quelconque des revendications précédentes, **caractérisé par le fait que** la perte de charge hydrodynamique de l'un au moins des circuits d'entrée et de sortie, notamment du circuit de sortie, est plus petite, et de préférence au moins dix fois plus petite que celle du microcanal, et de préférence encore, plus petite par plusieurs ordres de grandeur 10$^n$ avec n $\geq$ 2.

8. Procédé selon l'une quelconque des revendications précédentes, **caractérisé par le fait que** le microcanal est relié à l'enceinte par un conduit (7), de préférence entièrement rempli par un ou plusieurs liquides.

9. Procédé selon l'une quelconque des revendications précédentes, **caractérisé par le fait que** les circuits d'entrée et de sortie comportent chacun une source de pression (4 ; 10), les pressions de celles-ci étant différentes.

10. Procédé selon l'une quelconque des revendications précédentes, **caractérisé par le fait que** le circuit de sortie et l'une des extrémités du microcanal communiquent avec une source de pression commune (4).

11. Procédé selon l'une quelconque des revendications précédentes, **caractérisé par le fait que** l'un au moins des circuits d'entrée et de sortie comporte une vanne (11 ; 11' ; 12 ; 58-61 ; 62-65) contrôlable progressivement

12. Procédé selon la revendication précédente, **caractérisé par le fait que** la vanne est une électrovanne ou une vanne à pointeau.

13. Procédé selon l'une quelconque des revendications précédentes, **caractérisé par le fait que** l'un au moins des circuits d'entrée et de sortie est relié à un système de régulation dynamique (18) apte à contrôler le circuit d'entrée ou de sortie en fonction d'une information liée à l'écoulement ou à la pression.

14. Procédé selon la revendication précédente, **caractérisé par le fait que** ladite information est délivrée par un capteur de pression ou un capteur d'écoulement ou de débit, ou par une cascade de capteurs, notamment de pression ou de débit, ayant des plages de fonctionnement différentes, ou un détecteur d'espèces ou de molécules, à fluorescence, ou électrochimique, ou d'absorption, ou à résonance plasmon, ou par ampérométrie cyclique, ou électronique, ou électrique, ou encore, un bio senseur.

15. Procédé selon l'une quelconque des revendications précédentes, **caractérisé par le fait que** le ou les microcanaux sont réalisés, par exemple par gravure, moulage, par extrusion ou par injection, compression à chaud ou à froid, sur ou dans un support.

16. Procédé selon l'une quelconque des revendications précédentes, **caractérisé par le fait que** chaque enceinte communique avec une extrémité du microcanal par un conduit et **par le fait que** l'alimentation en produit liquide de chaque enceinte est assurée par une tubulure introduite dans le conduit et débouchant dans le fond de celui-ci.

17. Procédé selon l'une quelconque des revendications précédentes, **caractérisé par le fait que** le microcanal est relié à chaque extrémité à une enceinte, chaque enceinte étant en communication avec un circuit d'entrée et un circuit de sortie entre lesquels peut s'établir un écoulement de fluide dans l'enceinte associée.

18. Procédé selon l'une quelconque des revendications précédentes, **caractérisé par le fait que** le dispositif comporte une pluralité de microcanaux dont deux au moins sont reliés chacun à une extrémité à une enceinte, chaque enceinte étant en communication avec un circuit d'entrée et un circuit de sortie entre lesquels peut s'établir un écoulement de fluide, l'un au moins des circuits d'entrée et de sortie étant contrôlable de manière à modifier la pression à l'extrémité du microcanal.

**19.** Procédé selon l'une quelconque des revendications précédentes, **caractérisé par le fait que** le dispositif comporte au moins une électrode, de préférence deux électrodes.

**20.** Procédé selon la revendication précédente, **caractérisé par le fait que** l'électrode est placée dans une enceinte, celle-ci étant en communication avec le microcanal par l'intermédiaire d'un liquide électriquement conducteur.

**21.** Procédé selon l'une quelconque des revendications précédentes, **caractérisé par le fait que** le dispositif comporte une ou plusieurs enceintes réalisées au moins partiellement sur une platine, cette dernière étant de préférence distincte des platines définissant le ou les microcanaux associés.

**22.** Procédé selon l'une quelconque des revendications précédentes, au moins un des circuits d'entrée et de sortie communiquant avec l'atmosphère ambiante.

**23.** Procédé selon la revendication 1, dans lequel le circuit de sortie comporte une source de pression constituée par un puits de pression ou communiquant directement ou indirectement avec un puits de pression.

**24.** Procédé selon la revendication 1, dans lequel l'enceinte a un volume plus de cinq fois supérieur à celui du microcanal.

**25.** Procédé selon la revendication 1, le circuit de sortie comportant une source de pression ayant une pression sensiblement constante au moins pendant l'écoulement du produit dans le microcanal.

**26.** Procédé selon la revendication 1, l'écoulement de fluide entre le circuit d'entrée et de sortie ayant un débit au moins dix fois plus grand que celui du produit dans le microcanal.

**27.** Procédé selon l'une quelconque des revendications précédentes, pour l'une des applications suivantes : méthode de diagnostic, d'analyse, de purification ou de manipulation d'espèces contenues dans le produit au sein du dispositif, méthode de synthèse d'espèces, méthode de modification des caractéristiques physiques ou chimiques d'espèces, méthode de criblage à haut débit ou de recherche de médicaments, chromatographie, électrochromatographie, électrophorèse, transport de chaleur au sein du dispositif.

**28.** Procédé de séparation des substances contenues dans un produit, ou de contrôle d'une réaction chimique ou de changement d'état, **caractérisé par le fait qu'**il comporte les étapes consistant à :

- faire circuler ledit produit dans un microcanal ou un réseau de microcanaux d'un dispositif microfluidique tel que défini dans l'une quelconque des revendications 1 à 26, et
- contrôler la vitesse d'écoulement dudit produit dans le microcanal ou le réseau de microcanaux suivant un procédé selon l'une quelconque des revendications précédentes.

**Patentansprüche**

**1.** Verfahren zum Steuern einer Durchflussrate in einem Mikrokanal (2; 42-45; 100-103) einer Mikrofluidvorrichtung, wobei diese Vorrichtung eine Kammer (6; 6'; 47-50; 92-95), einen Eingangskreislauf (8; 8'; 124) und einen Ausgangskreislauf (9; 9'; 125) aufweist, die mit der Kammer verbunden sind und zwischen welchen ohne Kontakt mit dem Mikrokanal ein im Wesentlichen stetiger Fluidstrom herstellbar ist, wobei der Eingangs- und der Ausgangskreislauf direkt in die Kammer münden, so dass der Fluidstrom zwischen dem Eingangs- und Ausgangskreislauf im Wesentlichen innerhalb der Kammer verläuft, oder die über eine einzige Leitung mit der Kammer verbunden sind, so dass der Strom zwischen dem Eingangs- und dem Ausgangskreislauf nicht innerhalb der Kammer verläuft, wobei mindestens einer der Eingangs- und Ausgangskreisläufe ein Ventil (11; 11'; 12; 58-61; 62-65) umfasst und steuerbar ist, um den Druck an einem Ende des Mikrokanals unabhängig vom Druck am anderen Ende des Mikrokanals zu ändern, wobei gemäß dem Verfahren ohne Kontakt mit dem Mikrokanal ein im Wesentlichen stetiger Fluidstrom zwischen dem Eingangs- und Ausgangskreislauf hergestellt wird und das Ventil zur Veränderung des Drucks gesteuert wird.

**2.** Verfahren nach dem vorhergehenden Anspruch, **dadurch gekennzeichnet, dass** das in der Kammer (6; 6'; 47-50; 92-95) zwischen dem Eingangskreis und dem Ausgangskreislauf fließende Fluid sich von dem Produkt oder den Produkten, die Mikrokanal (2; 42-45; 100-103) enthalten sind, unterscheidet.

**3.** Verfahren nach dem vorhergehenden Anspruch, **dadurch gekennzeichnet, dass** das zwischen den Eingangs- und Ausgangskreisläufen fließende Fluid ein Gas ist.

4. Verfahren nach einem der Ansprüche 2 und 3, **dadurch gekennzeichnet, dass** das in dem Mikrokanal (2; 42-45; 100-103) enthaltene Produkt eine Flüssigkeit ist.

5. Verfahren nach einem der vorhergehenden Ansprüche, **dadurch gekennzeichnet, dass** der Mikrokanal (2; 42-45; 100-103) ein Oberflächen / Volumen-Verhältnis hat, das im Wesentlichen größer als 1 mm$^{-1}$ ist, vorzugsweise 4 mm$^{-1}$, beispielsweise 10 mm$^{-1}$, insbesondere 1 $\mu$m$^{-1}$.

6. Verfahren nach einem der vorhergehenden Ansprüche, **dadurch gekennzeichnet, dass** das Volumen der Kammer (6; 6'; 47-50; 92-95) zwischen 10 mm$^3$ und 5 ml liegt.

7. Verfahren nach einem der vorhergehenden Ansprüche, **dadurch gekennzeichnet, dass** der hydrodynamische Druckabfall mindestens eines der Eingangs- und Ausgangskreisläufe, insbesondere des Ausgangskreislaufs, kleiner und vorzugsweise mindestens zehnmal kleiner als derjenige des Mikrokanals und weiter bevorzugt um mehrere Größenordnungen 10$^n$ mit n $\geq$ 2 kleiner ist.

8. Verfahren nach einem der vorhergehenden Ansprüche, **dadurch gekennzeichnet, dass** der Mikrokanal durch eine Leitung (7) mit der Kammer verbunden ist, die vorzugsweise vollständig mit einer oder mehreren Flüssigkeiten gefüllt ist.

9. Verfahren nach einem der vorhergehenden Ansprüche, **dadurch gekennzeichnet, dass** der Eingangs- und Ausgangskreislauf jeweils eine Druckquelle (4; 10) umfasst, deren Drücke unterschiedlich sind.

10. Verfahren nach einem der vorhergehenden Ansprüche, **dadurch gekennzeichnet, dass** der Ausgangskreislauf und ein Ende des Mikrokanals mit einer gemeinsamen Druckquelle (4) verbunden sind.

11. Verfahren nach einem der vorhergehenden Ansprüche, **dadurch gekennzeichnet, dass** mindestens einer der Eingangs- und Ausgangskreisläufe ein progressiv steuerbares Ventil (11; 11'; 12; 58-61; 62-65) aufweist.

12. Verfahren nach dem vorhergehenden Anspruch, **dadurch gekennzeichnet, dass** das Ventil ein Elektromagnetisches Ventil oder ein Nadelventil ist.

13. Verfahren nach einem der vorhergehenden Ansprüche, **dadurch gekennzeichnet, dass** mindestens einer der Eingangs- und Ausgangskreisläufe mit einem dynamischen Steuersystem (18) verbunden ist, welches abhängig von strömungs- oder druckbezogenen Informationen den Eingangs- oder Ausgangskreislauf steuern kann.

14. Verfahren dem vorhergehenden Anspruch, **dadurch gekennzeichnet, dass** die Information von einem Drucksensor oder einen Strömungssensor oder einem Durchsatzsensor oder von einer Reihe von Sensoren, insbesondere für Druck oder Durchsatzrate bereitgestellt werden, die unterschiedliche Sensitivitätsbereiche haben, oder von einem Typ- oder Moleküldetektor für Fluoreszenz oder elektrochemisch, für Absorption oder Plasmaresonanz oder durch zyklische Amperometrie oder elektronisch oder elektrisch oder auch einem Biosensor.

15. Verfahren nach einem der vorhergehenden Ansprüche, **dadurch gekennzeichnet, dass** die Mikrokanäle beispielsweise durch Gravur, Gießen, mit Extrusion oder Injektion, heißer oder kalter Kompression, auf oder in einem Träger hergestellt sind.

16. Verfahren nach einem der vorhergehenden Ansprüche, **dadurch gekennzeichnet, dass** jede Kammer über eine Leitung in Verbindung mit einem Ende des Mikrokanals steht und dass die Zufuhr von flüssigem Produkt für jede Kammer durch ein in die Leitung eingeführtes Rohr gewährleistet ist, welches in den Boden desselben mündet.

17. Verfahren nach einem der vorhergehenden Ansprüche, **dadurch gekennzeichnet, dass** der Mikrokanal an jedem Ende mit einer Kammer verbunden ist, wobei jede Kammer mit einem Eingangskreislauf und einem Ausgangskreislauf verbunden ist, zwischen denen in der entsprechenden Kammer ein Fluidstrom herstellbar ist.

18. Verfahren nach einem der vorhergehenden Ansprüche, **dadurch gekennzeichnet, dass** die Vorrichtung sie eine Vielzahl von Mikrokanälen umfasst, von denen mindestens zwei jeweils an einem Ende mit einer Kammer verbunden sind, wobei jede Kammer mit einem Eingangskreislauf und einem Ausgangskreislauf verbunden ist, zwischen denen ein Fluidstrom hergestellt werden kann, wobei mindestens einer der Eingangs- und Ausgangskreisläufe steuerbar ist, um den Druck am Ende des Mikrokanals zu ändern.

19. Verfahren nach einem der vorhergehenden Ansprüche, **dadurch gekennzeichnet, dass** die Vorrichtung mindestens eine Elektrode, vorzugsweise zwei Elektroden umfasst.

20. Verfahren nach dem vorhergehenden Anspruch, **dadurch gekennzeichnet, dass** die Elektrode in einer Kammer angeordnet ist, wobei die Kammer über eine elektrisch leitende Flüssigkeit mit dem Mikrokanal in Verbindung steht.

21. Verfahren nach einem der vorhergehenden Ansprüche, **dadurch gekennzeichnet, dass** die Vorrichtung eine oder mehrere Kammern umfasst, die zumindest teilweise auf einer Platine ausgebildet sind, wobei die Platine vorzugsweise von den Platinen getrennt ist, die die zugehörigen Mikrokanäle definieren.

22. Verfahren nach einem der vorhergehenden Ansprüche, **dadurch gekennzeichnet, dass** zumindest einer der Eingangs- und Ausgangskreisläufe mit einer Umgebungsatmosphäre verbunden ist.

23. Verfahren nach einem der vorhergehenden Ansprüche, **dadurch gekennzeichnet, dass** der Ausgangskreislauf eine Druckquelle umfasst, die durch einen Druckschacht gebildet ist oder direkt oder indirekt mit einem Druckschacht kommuniziert.

24. Verfahren nach Anspruch 1, wobei die Kammer ein Volumen hat, das mehr als fünfmal größer ist als dasjenige des Mikrokanals.

25. Verfahren nach Anspruch 1, wobei der Ausgangskreislauf eine Druckquelle umfasst, die zumindest während das Produkt im Mikrokanal fließt einen im Wesentlichen konstanten Druck bereitstellt.

26. Verfahren nach Anspruch 1, wobei der Strom zwischen dem Eingangskreislauf und den Ausgangskreislauf einen Durchsatz hat, der wenigstens zehnmal größer als derjenige des Produkts im Mikrokanal ist.

27. Verfahren nach einem der vorhergehenden Ansprüche für eine der folgenden Anwendungen: Verfahren zur Diagnose, Analyse, Reinigung oder Manipulation von Arten, die in dem Produkt innerhalb der Vorrichtung enthalten sind, Verfahren zur Synthese von Arten, Verfahren zur Modifikation der physikalischen oder chemischen Eigenschaften von Arten, Verfahren zur Hochdurchsatzuntersuchung oder Arzneimittelforschung, Chromatographie, Elektrochromatographie, Elektrophorese, Wärmetransport innerhalb des Geräts.

28. Verfahren zur Separation von in einem Produkt enthaltenen Substanzen oder zur Kontrolle einer chemischen Reaktion oder einer Zustandsänderung, **dadurch gekennzeichnet, dass** es die folgenden Schritte umfasst:

   - Zirkulierenlassen des Produkts in einem Mikrokanal oder einem Netzwerk von Mikrokanälen einer mikrofluidischen Vorrichtung gemäß einem der Ansprüche 1 bis 26, und
- Steuern der Fließgeschwindigkeit des Produkts in dem Mikrokanal oder dem Netzwerk von Mikrokanälen gemäß dem Verfahren nach einem der vorhergehenden Ansprüche.

## Claims

1. A method for controlling a flow rate in a microchannel (2; 42-45; 100-103) of a microfluidic device (1; 1'; 40; 90), the said microfluidic device comprising a chamber (6; 6'; 47-50; 92-95), an inlet circuit (8; 8'; 124) and an outlet circuit (9; 9'; 125) which are connected to the chamber and between which a sensibly continuous flow of fluid can be established without contact with the microchannel, the inlet circuit and the outlet circuit merging directly in the chamber such that the flow of the fluid between the inlet circuit and the outlet circuit is in the chamber, or being connected to the chamber through a unique conduit, the flow between the inlet circuit and the outlet circuit being then outside the chamber, at least one of the circuits - the inlet circuit and/or the outlet circuit - comprising a valve (11; 11'; 12; 58-61; 62-65) and being controllable so as to modify the pressure at said end of the microchannel, independently of the pressure at another end of the microchannel, the method in which a sensibly continuous flow is established, without contact with the microchannel, between the inlet circuit and the outlet circuit and in which the valve is controlled to modify said pressure.

2. The method as claimed in the preceding claim, **characterized in that** said fluid circulating in the chamber (6; 6'; 47-50; 92-95) between the inlet circuit and the outlet circuit is different from the product or products contained in the microchannel (2; 42-45; 100-103).

3. The method as claimed in the preceding claim, **characterized in that** the fluid circulating between the inlet and outlet circuits is a gas.

4. The method as claimed in one of claims 2 and 3, **characterized in that** the product contained in the microchannel (2; 42-45; 100-103) is a liquid.

5. The method as claimed in any one of the preceding claims, **characterized in that** the microchannel (2; 42-45; 100-103) has a surface/volume ratio appreciably higher than 1 $mm^{-1}$, preferably 4 $mm^{-1}$, for example 10 $mm^{-1}$, or even 1 $\mu m^{-1}$.

6. The method as claimed in any one of the preceding claims, **characterized in that** the volume of the chamber (6; 6'; 47-50; 92-95) is comprised between 10 $mm^3$ and 5 ml.

**7.** The method as claimed in any one of the preceding claims, **characterized in that** the hydrodynamic loss over at least one of the circuits - the inlet circuit and/or the outlet circuit - particularly over the outlet circuit, is lower, and preferably at least ten times lower than that of the microchannel, and more preferably still, several orders of magnitude $10^n$ lower, with $n \geq 2$.

**8.** The method as claimed in any one of the preceding claims, **characterized in that** the microchannel is connected to the chamber by a duct (7), preferably entirely filled with one or several liquids.

**9.** The method as claimed in any one of the preceding claims, **characterized in that** the inlet and outlet circuits each comprise a pressure source (4; 10), the pressures thereof being different.

**10.** The method as claimed in any one of the preceding claims, **characterized in that** the outlet circuit and one of the ends of the microchannel communicate with a common pressure source (4) .

**11.** The method as claimed in any one of the preceding claims, **characterized in that** at least one of the circuits - the inlet circuit and/or the outlet circuit - comprises a progressively controllable valve (11; 11'; 12; 58-61; 62-65).

**12.** The method as claimed in the preceding claim, **characterized in that** the valve is a solenoid valve or a needle valve.

**13.** The method as claimed in any one of the preceding claims, **characterized in that** at least one of the circuits - the inlet circuit and/or the outlet circuit - is connected to a dynamic regulation system (18) able to control the inlet or outlet circuit as a function of an item of information associated with flow or pressure.

**14.** The method as claimed in the preceding claim, **characterized in that** said information item is delivered a pressure or flow or flow rate sensor, or by a succession of sensors, notably a pressure and flow rate sensors, having different operating ranges, or a species or molecule sensor, the sensor being a fluorescence, an electrochemistry, an absorption, a plasmon resonance, a cyclic amperometry, an electronic, an electric or a bio sensor.

**15.** The method as claimed in any one of the preceding claims, **characterized in that** the microchannel or microchannels are produced, for example by engraving, molding, extrusion or injection, hot or cold compression, on or in a support.

**16.** The method as claimed in any one of the preceding claims, **characterized in that** each chamber communicates with one end of the microchannel via a duct and **in that** the supply of liquid product to each chamber is provided via a tube introduced into the duct and opening into the end thereof.

**17.** The method as claimed in any one of the preceding claims, **characterized in that** the microchannel is connected at each end to a chamber, each chamber being in communication with an inlet circuit and with an outlet circuit between which circuits a flow of fluid may be established in the associated chamber.

**18.** The method as claimed in any one of the preceding claims, **characterized in that** it comprises a plurality of microchannels, at least two of which are each connected at one end to a chamber, each chamber being in communication with an inlet circuit and an outlet circuit between which circuits a flow of fluid may be established, at least one of the circuits - the inlet circuit and/or the outlet circuit - being controllable so as to modify the pressure at the end of the microchannel.

**19.** The method as claimed in any one of the preceding claims, **characterized in that** it comprises at least one electrode, preferably two electrodes.

**20.** The method as claimed in the preceding claim, **characterized in that** the electrode is placed in a chamber, the latter being in communication with the microchannel via an electrically conductive liquid.

**21.** The method as claimed in any one of the preceding claims, **characterized in that** it comprises one or more chambers produced at least partially on a plate, the latter preferably being separate from the plates defining the associated microchannel or microchannels.

**22.** The method as claimed in any one of the preceding claims, at least one of the inlet circuit and the outlet circuit communicating with the ambient atmospheric.

**23.** The method as claimed in claim 1, in which the outlet circuit comprises a pressure source constituted by a pressure well or directly or indirectly communicating with a pressure well.

**24.** The method as claimed in claim 1, in which the chamber has a volume that is five times the volume of the microchannel.

**25.** The method as claimed in claim 1, the outlet circuit comprising a pressure source having a sensibly constant pressure at least during the flowing of the product in the microchannel.

**26.** The method as claimed in claim 1, the flowing of the fluid between the inlet circuit and the outlet circuit having a flow rate at least ten times higher than the flow rate of the product in the microchannel.

27. The method as claimed in any one of the preceding claims, for at least one of the following applications: a method of diagnosing, analyzing, purifying or handling species contained in the product within the device, a method for synthesizing species, a method for modifying the physical or chemical characteristics of species, a high-throughput screening method or a drug research method, a chromatography, electrochromatography, or electrophoresis method, or a method of conveying heat to within the device.

28. A method for separating substances contained in a product, or for monitoring a chemical reaction or a change in state, **characterized in that** it comprises the steps consisting in:

- circulating said product through a microchannel or a network of microchannels of a microfluidic device as claimed in any one of claims 1 to 22, and
- monitoring either the rate of flow of said product in the microchannel or network of microchannels, or the pressure difference between ends of the microchannel or microchannels.

FIG.1

EP 1 628 769 B1

FIG.2

FIG.3

FIG.4A

FIG.4B

FIG.4C

FIG.5

FIG.6

FIG.7

Intensité
(unité arbitraire)

Fragments

ADN lambda

ADN T4

0          100          200          300
Temps (secondes)

FIG.8

Intensité
(unité arbitraire,

80

70

60

50

40

30

·0          50          100          150          200
(secondes)

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6012902 A
- US 6408878 B
- US 6296020 B
- US 2002033193 A
- WO 0104909 A
- WO 0188204 A

**Littérature non-brevet citée dans la description**

- **M. MADOU.** Fundamentals of Microfabrication. CRC Press, 1997
- **Y. XIA ; G. M. WHITESIDES.** Angew. Chem. Int. Ed. 1998, vol. 37, 550
- **DOYLE.** *Science,* 2002, vol. 295, 2237
- **C.S. EFFENHAUSER ; A. MANZ ; H.M. WIDMER.** *Anal. Chem.,* 1993, vol. 65, 2637